(19)

Europäisches Patentamt
European Patent Office
Office européen des brevets

(11) **EP 2 552 131 A2**

(12) **EUROPEAN PATENT APPLICATION**

(43) Date of publication:
**30.01.2013 Bulletin 2013/05**

(51) Int Cl.:
**H04S 7/00** (2006.01)

(21) Application number: **12166270.4**

(22) Date of filing: **01.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.07.2011 JP 2011165274**

(71) Applicant: **FUJITSU LIMITED**
**Kawasaki-shi,**
**Kanagawa 211-8588 (JP)**

(72) Inventors:
• **Suzuki, Masanao**
**Kawasaki-shi, Kanagawa 211-8588 (JP)**
• **Otani, Takeshi**
**Kawasaki-shi, Kanagawa 211-8588 (JP)**
• **Togawa, Taro**
**Kawasaki-shi, Kanagawa 211-8588 (JP)**
• **Ishikawa, Chisato**
**Kawasaki-shi, Kanagawa 211-8588 (JP)**

(74) Representative: **Stebbing, Timothy Charles**
**Haseltine Lake LLP**
**300 High Holborn**
**London WC1V 7JH (GB)**

(54) **Reverberation suppression device, method, and program for a mobile terminal device**

(57)    A reverberation suppression device includes a first storage unit (101) configured to store, in advance, information representing a first impulse response obtained from a signal output from a microphone (104) when a sound source positioned according to directivity of either a speaker (106) or the microphone, which are mounted on a mobile terminal (100), outputs an impulse; a second storage unit (102) configured to store information representing a second impulse response obtained from a signal output from the microphone (104) when the speaker (106) mounted on the mobile terminal outputs an impulse in a room where reverberation sound is to be suppressed; a response correction unit (103) configured to obtain a corrected impulse response, which reflects the room's environment, by correcting the second impulse response, which is represented by the information stored in the second storage unit (102), using the information representing the first impulse response; and a sound correction unit (110) configured to correct a sound signal.

FIG. 1

EP 2 552 131 A2

**Description**

The present invention relates to a reverberation suppression device which suppresses reverberation of sound input to a microphone of a mobile terminal having a microphone and a speaker, a reverberation suppression method, and a reverberation suppression program.

When a user uses a telephone-call function of a mobile terminal, the user's voice directly reaches a microphone, and in addition, the voice may also reach the microphone after being reflected by walls and a ceiling around the user. Hereinafter, sound that directly reaches a microphone is referred to as "direct sound" whereas sound that reaches the microphone after being reflected by the surrounds, for example by walls or a ceiling, is referred to as "reverberation sound". Furthermore, an output signal is output from the microphone in response to the sound reaching the microphone. The output signal, which corresponds to the sound reaching the microphone, is referred to as a "sound signal".

For example, in a comparatively-small chamber, such as a bathroom, there is a larger amount of reverberation sound, which is reflected by surrounding objects, when compared with other places, such as a living room. Therefore, when a telephone-call function of a mobile terminal is used in a bathroom, for example, it may be difficult to reproduce clear sound from a sound signal obtained by a microphone due to the reverberation sound which is superposed on the direct sound.

As a method for removing a component of the reverberation sound from the sound signal obtained by the microphone, for example, a technique of measuring an impulse response in advance using a sound source and the microphone, which are disposed in accordance with individual usages, and utilizing the impulse response is disclosed in Miyoshi, M., and Kaneda, Y., "Inverse filtering of room acoustics," IEEE Trans. ASSP, 36(2), pp. 145-152, 1988. In this technique, for example, inverse filters are obtained in accordance with impulse responses measured in various rooms where reverberation sound is to be removed, and the inverse filters are applied to signals obtained by microphones whereby the reverberation is suppressed.

Furthermore, Japanese Laid-open Patent Publication No. 2008-292845 discusses a technique for obtaining inverse filters independently from impulse responses measured in individual environments by estimating the inverse filters so that sound signals become more appropriate sound signals based on a probability model for a temporal sequence of a sound signal.

As mobile terminals having a waterproof function are widely used, the telephone-call function of mobile terminals is also widely used in various environments including bathrooms. However, when the telephone-call function of a mobile terminal is used in small room, such as a bathroom, sound clarity in the telephone call is considerably degraded due to reverberation sound. Therefore, in order to maintain sound quality, reverberation sound is preferably removed.

Here, in order to use a technique disclosed in Miyoshi, M., and Kaneda, Y., "Inverse filtering of room acoustics," IEEE Trans. ASSP, 36(2), pp. 145-152, 1988, it is preferable that sound sources and microphones are installed on the assumption that users use mobile terminals in their bathrooms and impulse responses are measured in the bathrooms. However, it is difficult for the users to prepare the sound sources suitable for the measurements of the impulse responses and appropriately perform the installation taking directivity of the microphones mounted on the mobile terminals into consideration.

On the other hand, with the technique disclosed in Japanese Laid-open Patent Publication No. 2008-292845, although measurements of room impulse responses are not necessary, an extra period of time is used to converge inverse filters before suppression of the reverberation sound.

Therefore, it is desirable to provide a reverberation suppression device which suppresses reverberation sound using an impulse response measured using a speaker and a microphone which are mounted on a mobile terminal, a reverberation suppression method, and a reverberation suppression program.

According to an aspect of the invention a reverberation suppression device includes, a first storage unit configured to store, in advance, information representing a first impulse response obtained from a signal output from a microphone when a sound source positioned according to directivity of either a speaker or the microphone, which are mounted on a mobile terminal, outputs an impulse; a second storage unit configured to store information representing a second impulse response obtained from a signal output from the microphone when the speaker mounted on the mobile terminal outputs an impulse in a room where reverberation sound is to be suppressed; a response correction unit configured to obtain a corrected impulse response, which reflects the room's environment, by correcting the second impulse response, which is represented by the information stored in the second storage unit, using the information representing the first impulse response; and a sound correction unit configured to correct a sound signal obtained by the microphone when sound is input to the microphone in the room, in accordance with the corrected impulse response.

Features of the invention will be realized and attained by means of the elements and combinations particularly pointed out in the claims. It is to be understood that both the foregoing general description and the following detailed description are exemplary and explanatory and are not restrictive of the invention, as claimed.

According to the disclosed reverberation suppression device, reverberation suppression method, and reverberation suppression program, the reverberation sound may be suppressed by using an impulse response measured by a speaker and a microphone mounted on a mobile terminal. The program may be stored on a computer-readable medium.

These and/or other features will become apparent and more readily appreciated from the following description of the embodiments, taken in conjunction with the accompanying drawings of which:

FIG. 1 is a diagram illustrating a reverberation suppression device according to a first embodiment;

FIGs. 2A and 2B are diagrams illustrating arrangement of a speaker and a microphone;

FIG. 3 is a graph illustrating an example of impulse responses;

FIG. 4 is a diagram illustrating a reverberation suppression device according to a second embodiment;

FIGs. 5A to 5C are graphs illustrating weighting functions;

FIGs. 6A and 6B are graphs illustrating combining impulse responses;

FIGs. 7A and 7B are diagrams illustrating examples of estimated reverberation sound component spectra;

FIG. 8 is a diagram illustrating an example of a hardware configuration of a mobile terminal;

FIG. 9 is a flowchart illustrating an example of a process of a mobile terminal that has a reverberation suppression device;

FIG. 10 is a flowchart illustrating a measurement process performed to estimate reverberation characteristics;

FIG. 11 is a flowchart illustrating a process of suppressing reverberation in a frequency domain;

FIG. 12 is a graph illustrating a gain calculation process;

FIG. 13 is a diagram illustrating a reverberation suppression device according to a third embodiment;

FIGs. 14A and 14B are graphs illustrating examples of weighting functions;

FIG. 15 is a flowchart illustrating an example of a process of another mobile terminal that includes a reverberation suppression device;

FIG. 16 is a flowchart illustrating a process of calculating a characteristics coefficient vector C; and

FIG. 17 is a flowchart illustrating a process of suppressing reverberation in the time domain.

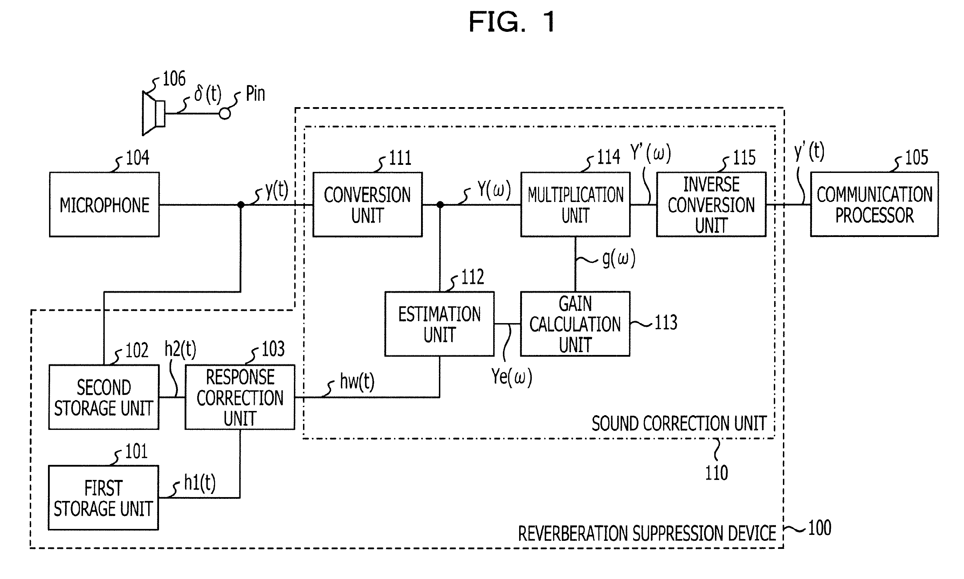

FIG. 1 is a diagram illustrating a reverberation suppression device according to a first embodiment. A reverberation suppression device 100 illustrated in FIG. 1, for example, suppresses a reverberation component included in a sound signal y(t) obtained by a microphone 104 mounted on a mobile terminal having a telephone-call function, such as a cellular phone, to thereby generate a corrected sound signal y'(t). The reverberation suppression device 100 supplies the corrected sound signal y'(t) to a communication processor 105 so that a clear voice for a user may be produced in a telephone call when the user uses the mobile terminal's telephone-call function in a bathroom. Note that the reverberation suppression device 100 may be used in a portable information terminal and in a portable game machine that have telephone-call functionality, and in a cordless telephone handset.

The reverberation suppression device 100 illustrated in FIG. 1 includes a first storage unit 101, a second storage unit 102, a response correction unit 103, and a sound correction unit 110.

The first storage unit 101 stores, for example, a first impulse response h1(t), which will be described hereinafter, as a portion of initial configuration data of the mobile terminal. The first impulse response h1(t) is, for example, a signal obtained by the microphone 104 when an impulse is output from a sound source, in a state in which the sound source is disposed taking directivity of the microphone 104 into consideration in a bathroom that has average reverberation characteristics.

Furthermore, the second storage unit 102 stores a second impulse response h2(t), which will be described hereinafter, before performing a reverberation suppression process on the sound signal y(t) input through the microphone 104. The second impulse response h2(t) is, for example, a signal obtained by the microphone 104 in accordance with an impulse output from a speaker 106 when an input signal $\delta(t)$ is supplied to the speaker 106 mounted on the mobile terminal through an input terminal Pin illustrated in FIG. 1. Note that the input signal $\delta(t)$ may have a given value d when a condition "t = T0" is satisfied and have a value 0 at time points t other than the time point T0.

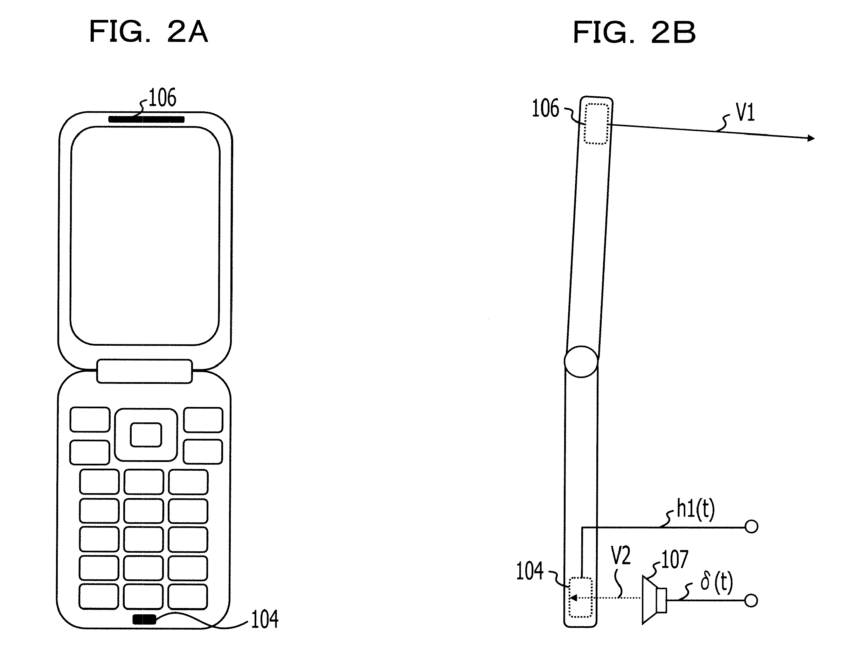

FIGs. 2A and 2B are diagrams illustrating an arrangement of the microphone 104 and the speaker 106. FIG. 2A illustrates the arrangement of the microphone 104 and the speaker 106 viewed from the front of the mobile terminal. Furthermore, a reference symbol "V1" illustrated in FIG. 2B represents a direction of directivity of sound output from the speaker 106, and a reference symbol "V2" represents a direction of directivity of sensitivity of the microphone 104.

The microphone 104 is brought close to a mouth of the user when the user makes a telephone call using the mobile terminal, and is positioned so as to have directivity relative to voice produced by the user as illustrated in FIGs. 2A and 2B. Similarly, the speaker 106 is brought close to an ear of the user when the user makes a telephone call using the mobile terminal, and is positioned so as to have the directivity toward the ear of the user. As described above, a distance between the microphone 104 and the speaker 106 disposed on the mobile terminal is larger than a distance between the microphone 104 and the mouth of the user obtained when the user makes a telephone call using the mobile terminal. In addition, a direction of sound waves output from the speaker 106 is different from a direction toward the microphone 104.

Direct sound, which is sound directly transmitted from the speaker 106 to the microphone 104, is affected by the distance between the speaker 106 and the microphone 104 and the directivity of the speaker 106 and the microphone 104. Therefore, the direct sound obtained when an impulse is generated by the speaker 106 mounted on the mobile terminal is considerably attenuated in comparison to where an impulse is generated by a sound source located in a position corresponding to the mouth of the user.

On the other hand, reverberation sound which remains in accordance with an impulse is little affected by the distance between the speaker 106 and the microphone 104 and the directivity of the speaker 106 and the microphone 104. Therefore, reverberation sound which reaches the microphone 104 when an impulse is generated by the speaker 106 mounted on the mobile terminal is roughly equal to reverberation sound which reaches the microphone 104 when an impulse is generated by the sound source located in a position corresponding to the mouth of the user.

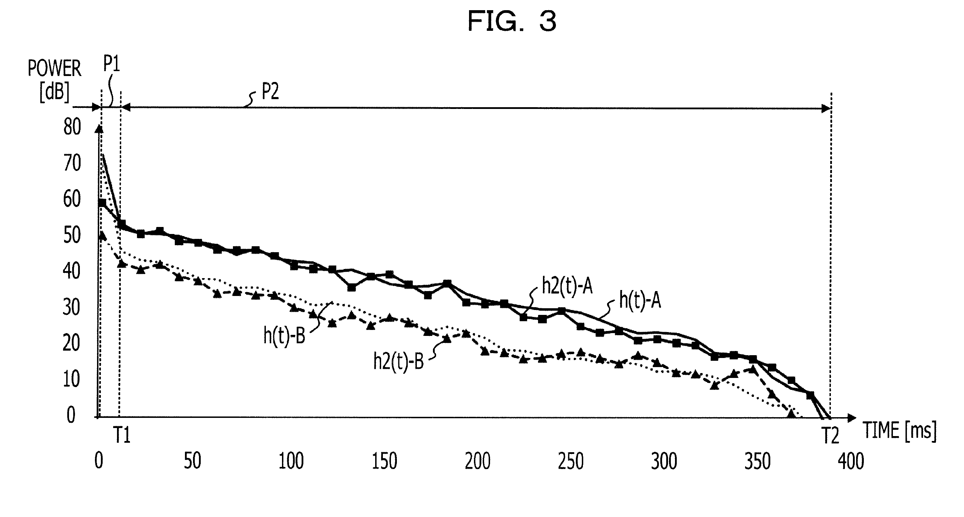

Note that FIG. 2B illustrates an arrangement of a sound source which is suitable for obtainment of impulse responses h(t)-A and h(t)-B, which will be described with reference to FIG. 3. A position of a speaker 107 illustrated as a sound source in FIG. 2B corresponds to a position of the mouth of the user who uses the telephone-call functionality of the mobile terminal.

FIG. 3 is a diagram illustrating an example of impulse responses. A reference symbol "h(t)-A" illustrated in FIG. 3 is an example of an impulse response in a bathroom A. Furthermore, a reference symbol "h(t)-B" illustrated in FIG. 3 is an example of an impulse response in a bathroom B. A reference symbol "h2(t)-A" illustrated in FIG. 3 is an example of a second impulse response obtained in the bathroom A using the speaker 106 and the microphone 104 of the mobile terminal. Furthermore, a reference symbol "h2(t)-B" illustrated in FIG. 3 is an example of a second impulse response obtained in the bathroom B using the speaker 106 and the microphone 104 of the mobile terminal.

The impulse response h(t)-A is obtained as a signal output from the microphone 104 when the sound source is located in a position facing the microphone 104 in the bathroom A and an impulse is generated by supplying an input signal $\delta(t)$ to the sound source. Similarly, the impulse response h(t)-B is obtained as a signal output from the microphone 104 when the sound source is located in a position facing the microphone 104 in the bathroom B and an impulse is generated by supplying an input signal $\delta(t)$ to the sound source.

When the impulse response h(t)-A and the second impulse response h2(t)-A illustrated in FIG. 3 are compared with each other, the impulse response h(t)-A and the second impulse response h2(t)-A are similarly changing after a time T1 which is a time point, for example, approximately 20 msec after an impulse is generated. However, differences in power are large in time points included in a period of time before the time T1. Furthermore, when the impulse response h(t)-B and the second impulse response h2(t)-B illustrated in FIG. 3 are also compared with each other, a similar tendency is recognized.

Note that, in the impulse response illustrated in FIG. 3, the direct sound mainly reaches the microphone 104 in a period of time from when the impulse is generated to when the time T1 is reached, whereas the reverberation sound mainly reaches the microphone 104 after the time T1. In the description below, the period of time when the direct sound mainly reaches the microphone 104 is referred to as a "first period P1" whereas the period of time in which the reverberation sound mainly reaches the microphone 104 is referred to as a "second period P2". The second period P2, for example, may be limited by a time T2 that is reached after a certain period of time has elapsed from the impulse generation time. The certain period of time, for example, may be determined in advance based on a period of time used for attenuation of the reverberation sound in an average bathroom (for example, 400 msec).

The difference in power between the second impulse response h2(t)-A and the impulse response h(t)-A in the first period P1 represents an attenuation of the power caused by the positions of the speaker 106 and the microphone 104 of the mobile terminal, which are separated from each other. Similarly, the power of the second impulse response h2(t)-B in the first period P1 is attenuated more than the power of the impulse response h(t)-B in the first period P1. These attenuations are problems when impulse responses are obtained in individual rooms in which reverberation sound is to be suppressed while the speaker 106 of the mobile terminal is used as a sound source.

Incidentally, when the two impulse responses h(t)-A and h(t)-B illustrated in FIG. 3 are compared with each other, although the power of the signals in the second period P2 are considerably different from each other, the two lines substantially overlap with each other in the first period P1.

As described above, in the first period P1, waveforms representing the impulse responses have substantially the same characteristics irrespective of environments of the rooms serving as measurement targets. Specifically, a portion of the impulse response h(t)-A of the bathroom A which corresponds to the first period P1 and a portion of the impulse response h(t)-B of the bathroom B which corresponds to the first period P1, wherein h(t)-A and h(t)-B have different characteristics, may be replaced by each other. Accordingly, for example, when the impulse response h(t)-A of the bathroom A and the second impulse response h2(t)-B are combined with each other, a corrected impulse response which is substantially equal to the impulse response h(t)-B of the bathroom B may be obtained.

Making use of this finding, the problem which blocks obtainment of appropriate impulse responses in individual usage environments based on measurements using the speaker 106 and the microphone 104 of the mobile terminal may be solved.

Specifically, by using the first impulse response h1(t) stored in the first storage unit 101 illustrated in FIG. 1 and the second impulse response h2(t) obtained in a desired room, a corrected impulse response hw(t), which reflects the transmission characteristics of the direct sound and the reverberation sound in the room, may be obtained.

The response correction unit 103 illustrated in FIG. 1 generates the corrected impulse response hw(t) by correcting the second impulse response h2(t), which is represented by information stored in the second storage unit 102, using information that represents the first impulse response h1(t) and is stored in the first storage unit 101. The response correction unit 103 may generate the corrected impulse response hw(t) by combining the first impulse response h1(t) and the second impulse response h2(t), as described below. Furthermore, the response correction unit 103 may generate the corrected impulse response hw(t) by amplifying the portion of the second impulse response h2(t) corresponding to the first period P1 so that the portion of the second impulse response h2(t) corresponding to the first period P1 approximately matches the power of the first impulse response h1(t) corresponding to the first period P1.

As described above, according to the reverberation suppression device 100 in the present disclosure, the corrected impulse response hw(t) which is useful for suppressing the reverberation sound in the desired room may be obtained by using the second impulse response h2(t) obtained by the speaker 106 and the microphone 104, which are mounted on the mobile terminal.

Note that the information representing the first impulse response h1(t), which is stored in the first storage unit 101 as illustrated in FIG. 1, may be obtained by measuring the first impulse response h1(t) using the microphone 104 when the mobile terminal is being developed. For example, as illustrated in FIG. 2B, the speaker 107 located in the position corresponding to the position of the mouth of the user may output an impulse, and a sound signal obtained by the microphone 104 at this time may be extracted as the first impulse response h1(t).

As described above, the sound correction unit 110 illustrated in FIG. 1 performs a process to suppress the reverberation sound included in the sound signal y(t) supplied from the microphone 104 in accordance with the corrected impulse response hw(t) generated by the response correction unit 103.

The sound correction unit 110 illustrated in FIG. 1 includes a conversion unit 111, an estimation unit 112, a gain calculation unit 113, a multiplication unit 114, and an inverse conversion unit 115.

The conversion unit 111 converts the sound signal y(t) into a sound signal spectrum $Y(\omega)$ of a frequency domain. Note that "$\omega$" denotes an angular frequency. The estimation unit 112 converts the corrected impulse response hw(t) described above into a corrected impulse response spectrum $Hw(\omega)$, and estimates the frequency characteristics of a component of the reverberation sound included in the sound signal spectrum $Y(\omega)$ in accordance with the corrected impulse response spectrum $Hw(\omega)$ and the sound signal spectrum $Y(\omega)$ of the frequency domain described above. Note that, in FIG. 1 and in a description below, the frequency characteristics of the component of the reverberation sound that is estimated, by the estimation unit 112, to be included in the sound signal spectrum $Y(\omega)$ is referred to as the "estimated reverberation sound component spectrum $Ye(\omega)$".

In accordance with the thus obtained estimated reverberation sound component spectrum $Ye(\omega)$, the gain calculation unit 113 calculates a gain $g(\omega)$ to be applied to the sound signal spectrum $Y(\omega)$ so that the reverberation sound component is suppressed. Additionally, the multiplication unit 114 performs a process of multiplying the sound signal spectrum $Y(\omega)$ by the gain $g(\omega)$ to thereby obtain a corrected sound signal spectrum $Y'(\omega)$, in which the reverberation sound component has been suppressed.

The inverse conversion unit 115 performs an inverse conversion process, which is a process opposite to the conversion performed by the conversion unit 111, on the corrected sound signal spectrum $Y'(\omega)$ to thereby obtain a corrected sound signal y'(t), in which the reverberation component has been suppressed, for the time domain.

As described above, according to the reverberation suppression device 100, which includes the sound correction unit 110, as illustrated in FIG. 1, the component of the reverberation sound included in the sound signal y(t) may be suppressed by performing a process in the frequency domain in accordance with the corrected impulse response spectrum $Hw(\omega)$ described above.

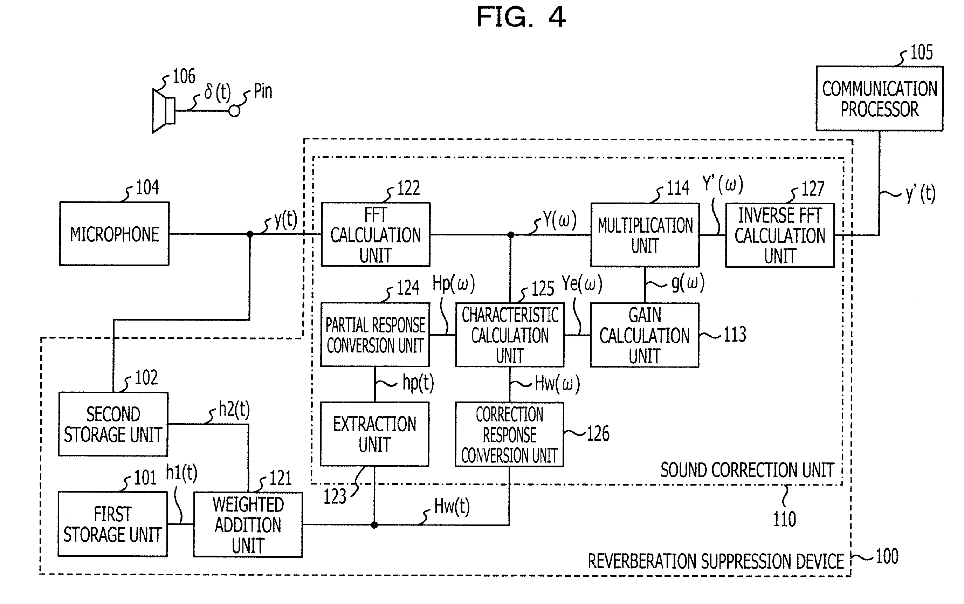

FIG. 4 is a diagram illustrating a reverberation suppression device according to a second embodiment. Components illustrated in FIG. 4 which are the same as those illustrated in FIG. 1 are denoted by reference numerals the same as those illustrated in FIG. 1, and descriptions thereof are omitted.

A weighted addition unit 121 illustrated in FIG. 4 is an example of the response correction unit 103 illustrated in FIG. 1. The weighted addition unit 121 performs weighted addition using information representing a waveform of a first impulse response h1(t) stored in a first storage unit 101 and information representing a waveform of a second impulse response h2(t) stored in a second storage unit 102 so as to generate a corrected impulse response hw(t).

The weighted addition unit 121 may perform, as a weighted addition process, for example, a process of adding the first impulse response h1(t), which is weighted by a weighting function $\alpha(t)$, and a second impulse response h2(t), which is weighted by a weighting function $\beta(t)$, to each other as represented by expression (1).

$$hw(t) = \alpha(t) \cdot h1(t) + \beta(t) \cdot h2(t) \quad (1)$$

Note that, in a first period P1 described above, the weighting function α(t) preferably applies to the first impulse response h1(t) a weight larger than that applied by the weighting function β(t) to the second impulse response h2(t). On the other hand, in a second period P2, the weighting function β(t) preferably applies to the second impulse response h2(t) a weight larger than that applied by the weighting function α(t) to the second impulse response h1(t).

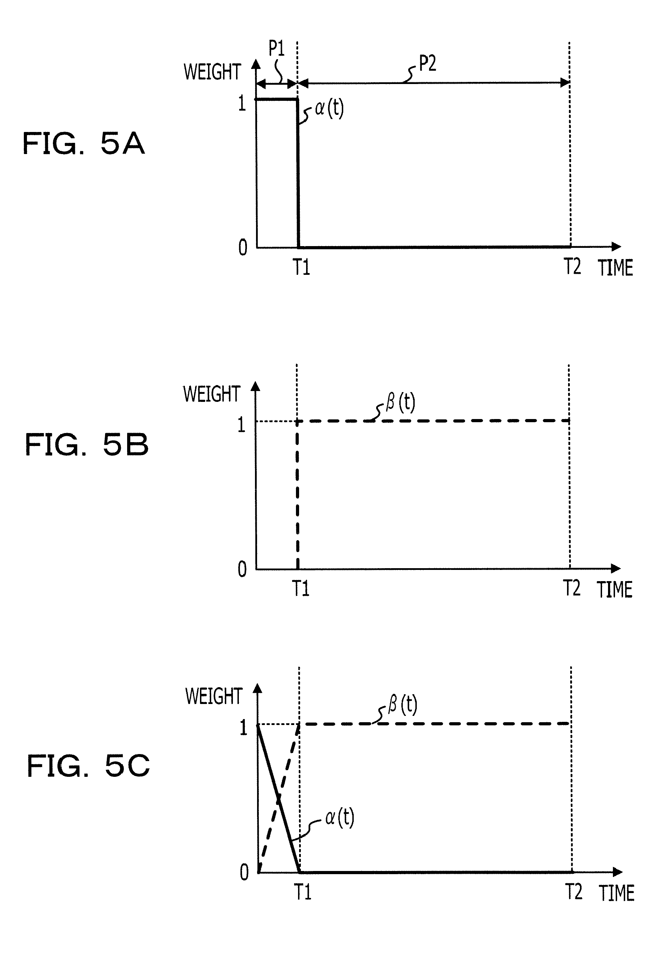

FIGs. 5A to 5C are diagrams illustrating the weighting functions α(t) and β(t). In FIGs. 5A to 5C, horizontal axes denote time elapsed after an impulse is generated and vertical axes denote a weighing value. Furthermore, in FIGs. 5A and 5C, examples of the weighting function α(t) applied to the first impulse response hl (t) are represented by solid lines. Moreover, in FIGs. 5B and 5C, examples of the weighting function β(t) applied to the second impulse response h2(t) are represented by dotted lines.

A value of a weight applied by the weighting function α(t) illustrated in FIG. 5A is 1 in the first period P 1 which is from an impulse generation time to a time T1 and is 0 in a second period P2 after the time T1. On the other hand, a value of a weight applied by the weighting function β(t) illustrated in FIG. 5B is 0 in the first period P 1 described above and is 1 in the second period P2.

Furthermore, the weighted addition unit 121 may perform the weighted addition process using the weighting function α(t) which applies a weight which monotonically reduces from 1 to 0 in the first period P 1 and the weighting function β(t) which applies a weight which monotonically increases from 0 to 1 in the first period P1, as illustrated in FIG. 5C. Furthermore, the weighted addition unit 121, for example, may limit a length of the second period P2 in accordance with a time T2 when the power of reverberation sound tends to fade in an environment such as an average bathroom. Specifically, the weighted addition unit 121, for example, may define values of weights to be applied by the weighting functions α(t) and β(t) in the first period P1 and the second period P2, which is a limited period of time from the time T1 to the time T2. Note that the time T1, for example, may come approximately 20 msec after the time when the impulse is generated, whereas the time T2, for example, may come approximately 400 msec after the time when the impulse is generated.

By weighting the first impulse response h1(t) using the weighting function α(t) illustrated in FIG. 5A, the weighted addition unit 121 may extract a portion of the first impulse response h1(t) corresponding to the first period P1. Furthermore, by weighting the first impulse response h2(t) using the weighting function β(t) illustrated in FIG. 5B, the weighted addition unit 121 may extract a portion of the second impulse response h2(t) corresponding to the second period P2.

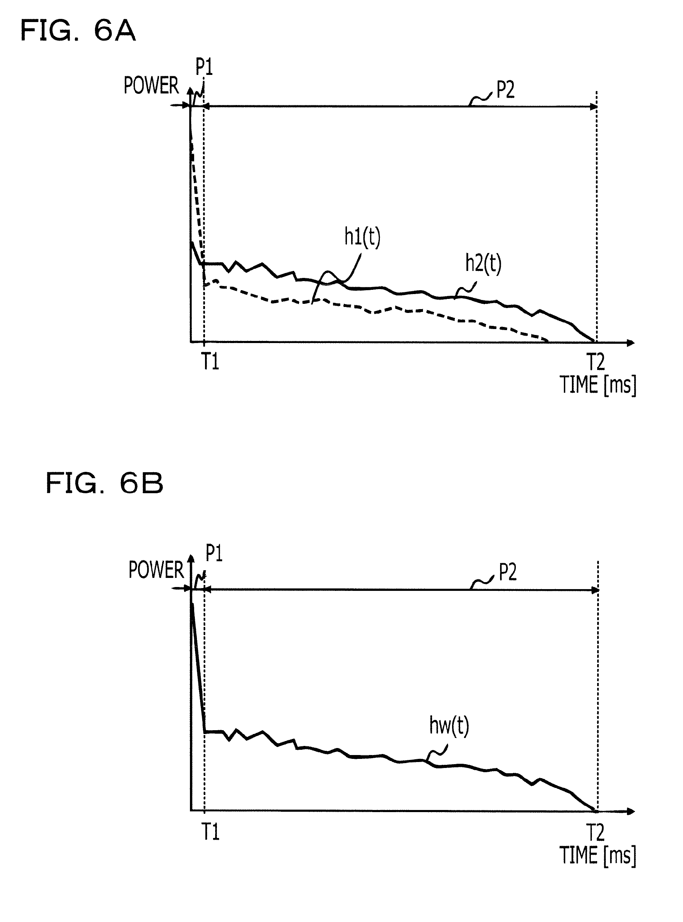

FIGs. 6A and 6B are diagrams illustrating combining the first impulse response h1(t) and the second impulse response h2(t). In FIGs. 6A and 6B, horizontal axes denote time elapsed after the impulse is generated and vertical axes denote signal power.

In FIG. 6A, an example of the first impulse response h1(t) is represented by a dotted line and an example of the second impulse response h2(t) is represented by a solid line. Furthermore, FIG. 6B depicts an example of a corrected impulse response hw(t) obtained through combining performed by the weighted addition unit 121 such that a weighted addition process is performed on the first impulse response h1(t) and the second impulse response h2(t). The corrected impulse response hw(t) illustrated in FIG. 6B is an example where the weighting functions α(t) and β(t) illustrated in FIGs. 5A and 5B are used.

The corrected impulse response hw(t) is obtained by combining the portion of the first impulse response h1(t) corresponding to the first period P1 and the portion of the second impulse response h2(t) corresponding to the second period P2. Accordingly, as described above, the corrected impulse response hw(t) is roughly equal to an impulse response obtained when a sound source is disposed in an ideal position which takes directivity of the microphone 104 of the mobile terminal into consideration in a room where the second impulse response h2(t) is obtained.

Note that, as described above, the second impulse response h2(t) may be obtained as a signal output from the microphone 104 when an impulse is output from the speaker 106 mounted on the mobile terminal in a given room. Measurement of the second impulse response h2(t) may be realized by having the user of the mobile terminal perform a simple operation.

Furthermore, in the sound correction unit 110 illustrated in FIG. 4, a fast Fourier transform (FFT) calculation unit 122 is an example of the conversion unit 111 illustrated in FIG. 1. Furthermore, an inverse FFT calculation unit 127 is an example of the inverse conversion unit 115 illustrated in FIG. 1.

The FFT calculation unit 122 may, for example, obtain an power spectrum $|Y(\omega)|^2$ of the sound signal y(t), instead of a sound signal spectrum $Y(\omega)$ of a frequency domain, which is a complex number, in accordance with expression (2). Note that, in expression (2), "FFT(y(t))" denotes the result of a Fourier transform performed on the sound signal y(t). Furthermore, in expression (2), "Re{FFT(y(t))}" represents a real part of the result of the Fourier transform and "Im{FFT(y(t))}" represents an imaginary part of the result of the Fourier transform.

$$|Y(\omega)|^2 = \operatorname{Re}\{FFT(y(t))\}^2 + \operatorname{Im}\{FFT(y(t))\}^2 \qquad (2)$$

The sound correction unit 110 illustrated in FIG. 4 further includes an extraction unit 123, a partial response conversion unit 124, a characteristics calculation unit 125, and a corrected response conversion unit 126 which serve as an example of the estimation unit 112 illustrated in FIG. 1.

The sound correction unit 110 illustrated in FIG. 4 estimates the frequency characteristics of a component of reverberation sound included in the sound signal spectrum $Y(\omega)$ in accordance with a model as represented in expression (3), which represents the transmission characteristics $H(\omega)$ of a system for obtaining the input sound signal spectrum $Y(\omega)$ in response to input of sound $X(\omega)$. In expression (3), the room's transmission characteristics $H(\omega)$, which include the sound source and the microphone 104, is obtained as a sum of the transmission characteristics $Hd(\omega)$ of a path directly extending from the sound source to the microphone 104 and the transmission characteristics $Hr(\omega)$ of a path extending from the sound source to the microphone 104 through a reflection from a surrounding wall or the like.

$$H(\omega) = Hd(\omega) + Hr(\omega) \qquad (3)$$

In this model, a direct sound component spectrum $Yd(\omega)$ included in the input sound signal spectrum $Y(\omega)$ is represented by an expression, such as expression (4), using the transmission characteristics $Hd(\omega)$ described above. Furthermore, a reverberation sound component spectrum $Yr(\omega)$ included in the input sound signal spectrum $Y(\omega)$ is represented by an expression, such as expression (5), using the transmission characteristics $Hr(\omega)$.

$$Yd(\omega) = Hd(\omega)X(\omega) \qquad (4)$$

$$Yr(\omega) = Hr(\omega)X(\omega) \qquad (5)$$

expressions (2) to (4) are combined, making use of the fact that the sound signal spectrum $Y(\omega)$ is a sum of the direct sound component spectrum $Yd(\omega)$ and the reverberation sound component spectrum $Yr(\omega)$, so that expression (6) representing the reverberation sound component spectrum $Yr(\omega)$ is obtained.

$$Yr(\omega) = \frac{Hr(\omega)}{H(\omega)} Y(\omega) \qquad (6)$$

As illustrated in expression (6), the reverberation sound component spectrum $Yr(\omega)$ representing the reverberation sound component included in an arbitrary sound signal $y(t)$ may be obtained by multiplying the input sound signal spectrum $Y(\omega)$ by a ratio of the transmission characteristics $Hr(\omega)$ of the reverberation sound to the transmission characteristics $H(\omega)$ in a room space.

Note that the corrected impulse response $hw(t)$ obtained by the weighted addition unit 121, which is as an example of the response correction unit 103, is a transmission function for the room space in the time domain. Accordingly, the corrected impulse response spectrum $Hw(\omega)$ obtained as a result of the Fourier transform performed by the corrected response conversion unit 126, which is illustrated in FIG. 4, on the corrected impulse response $hw(t)$ represents the transmission characteristics $H(\omega)$ in the frequency domain for the room space.

The corrected response conversion unit 126 may, for example, obtain a power $|Hw(\omega)|^2$, instead of the corrected impulse response spectrum $Hw(\omega)$, which is a complex number obtained by performing the fast Fourier transform on the corrected impulse response $hw(t)$, in accordance with expression (7). Note that "FFT(hw(t))" in expression (7) represents a result of the Fourier transform of the corrected impulse response $hw(t)$. Furthermore, in expression (7), "Re{FFT(hw(t))}" represents the real part of the result of the Fourier transform of the corrected impulse response $hw(t)$, and "Im{FFT(hw(t))}" represents the imaginary part of the result of the Fourier transform of the corrected impulse response $hw(t)$.

$$|Hw(\omega)|^2 = \operatorname{Re}\{FFT(hw(t))\}^2 + \operatorname{Im}\{FFT(hw(t))\}^2 \qquad (7)$$

The extraction unit 123 illustrated in FIG. 4 extracts a partial impulse response $hp(t)$ representing the reverberation sound component from the corrected impulse response $hw(t)$. For example, the extraction unit 123 may extract a portion of the corrected impulse response hw(t) which corresponds to the second period P2 illustrated in FIG. 6B as the partial impulse response hp(t). Note that the extraction unit 123 may extract the partial impulse response hp(t), for example, by applying a weighting function that applies a weight 0 in the first period P1 and a weight 1 in the second period P2 to the second impulse response h2(t) as illustrated in FIG. 5B. Furthermore, the extraction unit 123 may accept the second impulse response h2(t), which is weighted by the weighting function β(t) illustrated in FIG. 5B in the course of the weighted addition process performed by the weighted addition unit 121 described above, as the partial impulse response hp(t).

The partial impulse response hp(t) represents a transmission function of the path extending from the sound source to the microphone 104 via a reflection, by a surrounding wall or the like, in the time domain. Accordingly, the result of a fast Fourier transform performed by the partial response conversion unit 124, as illustrated in FIG. 4, on the partial impulse response hp(t) represents the transmission characteristics Hr(ω) of the reverberation component.

The partial response conversion unit 124, for example, may obtain the power $|Hp(\omega)|^2$ instead of the partial impulse response spectrum Hp(ω), which is a complex number obtained by performing the fast Fourier transform on the partial impulse response hp(t), in accordance with expression (8). Note that, in expression (8), "FFT(hp(t))" represents the result of a Fourier transform of the partial impulse response hp(t). Furthermore, in expression (8), "Re {FFT(hp(t))}" represents the real part of the result of a Fourier transform performed on the partial impulse response hp(t), and "Im {FFT(hp(t))}" represents the imaginary part of the result of a Fourier transform performed on the partial impulse response hp(t).

$$|Hp(\omega)|^2 = \text{Re}\{\text{FFT}(hp(t))\}^2 + \text{Im}\{\text{FFT}(hp(t))\}^2 \quad (8)$$

The ratio of the power $|Hp(\omega)|^2$ of the partial impulse response spectrum Hp(ω) to the power $|Hw(\omega)|^2$ of the corrected impulse response spectrum Hw(ω) corresponds to a ratio of the transmission characteristics Hr(ω) of the reverberation sound to the transmission characteristics H(ω) of the room space represented by expression (6).

Therefore, the estimated reverberation sound component spectrum Ye(ω) is represented by the ratio of the power $|Hw(\omega)|^2$ of the corrected impulse response spectrum Hw(ω) to the power $|Hp(\omega)|^2$ of the partial impulse response spectrum Hp(ω) as illustrated in expression (9). Accordingly, the characteristics calculation unit 125 may obtain the estimated reverberation sound component spectrum Ye(ω) in accordance with expression (9).

$$Ye(\omega) = \frac{|Hp(\omega)|^2}{|Hw(\omega)|^2} Y(\omega) \quad (9)$$

Note that the characteristics calculation unit 125 may estimate the estimated reverberation sound component spectrum Ye(ω) in accordance with expression (10) instead of expression (9) described above.

$$Ye(\omega) = \frac{|Hp(\omega)|}{|Hw(\omega)|} Y(\omega) \quad (10)$$

Furthermore, the characteristics calculation unit 125 may calculate a reverberation characteristics coefficient to multiply the sound signal spectrum Y(ω) in expressions (9) and (10) before sound to be subjected to the reverberation suppression process is input to the microphone 104.

As described above, the partial impulse response spectrum Hp(ω) used by the sound correction unit 110 illustrated in FIG. 4 to obtain the estimated reverberation sound component spectrum Ye(ω) is the result of a Fourier transform performed on the partial impulse response hp(t), which represents the transmission function of the reverberation sound. Therefore, the partial impulse response spectrum Hp(ω) more or less faithfully reflects the frequency characteristics of the reverberation sound. Furthermore, as described above, the corrected impulse response spectrum Hw(ω) obtained by performing a Fourier transform on the corrected impulse response hw(t) more or less faithfully reflects the transmission characteristics of the room where the second impulse response h2(t) is obtained.

Accordingly, by performing an estimation process in accordance with expression (9) or expression (10), the characteristics calculation unit 125 may obtain estimated reverberation sound component spectrum Ye(ω), which has high reliability.

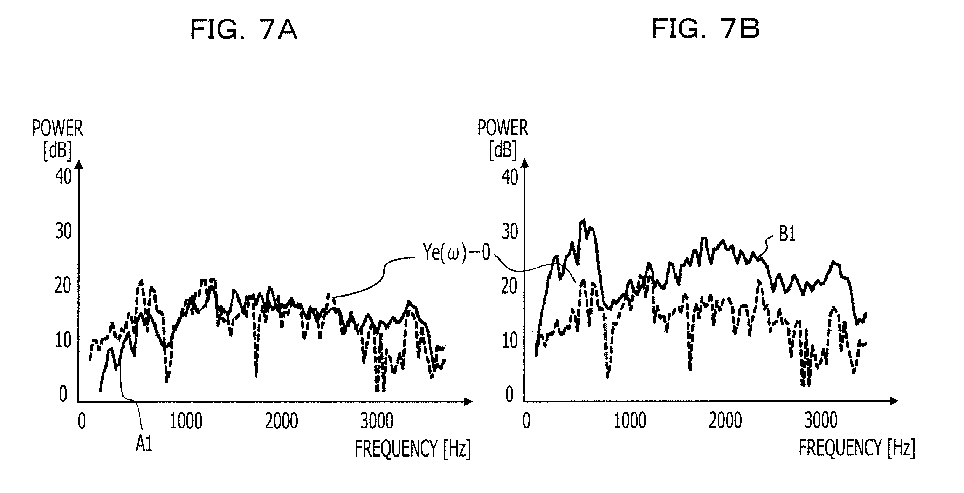

FIGs. 7A and 7B are diagrams illustrating examples of the estimated reverberation sound component spectrum Ye(ω). In graphs FIGs. 7A and 7B, dotted lines denoted by a reference symbol Ye(ω)-0 represent an estimated reverberation sound component spectrum Ye($\omega$) that is obtained by an estimation process performed in accordance with an impulse response measured in an approximately ideal arrangement.

In FIG. 7A, a solid line denoted by a reference symbol A1 represents the estimated reverberation sound component spectrum Ye($\omega$) obtained by an estimation process performed by the characteristics calculation unit 125, which is included in the sound correction unit 110 illustrated in FIG. 4, using the corrected impulse response hw(t). On the other hand, in FIG. 7B, a solid line denoted by a reference symbol B 1 represents the estimated reverberation sound component spectrum Ye($\omega$) obtained by an estimation process performed by the characteristics calculation unit 125 using the unchanged second impulse response h2(t).

The estimated reverberation sound component spectrum Ye($\omega$), which is illustrated in FIG. 7B and is obtained using the second impulse response h2(t) that has not been corrected, is considerably larger than the estimated reverberation sound component spectrum Ye($\omega$)-0, which is obtained using the impulse response measured in the approximately ideal arrangement, in most frequency bands.

On the other hand, in the graph of FIG. 7A, the estimated reverberation sound component spectrum Ye($\omega$) obtained using the corrected impulse response hw(t) and the estimated reverberation sound component spectrum Ye($\omega$)-0 obtained using the impulse response measured in the ideal arrangement have substantially equal tendency.

By inputting the estimated reverberation sound component spectrum Ye($\omega$), which is obtained as described above, to the gain calculation unit 113 illustrated in FIG. 4, the gain calculation unit 113 may obtain a gain g($\omega$) that has frequency characteristics suitable to suppress the reverberation sound component.

The multiplication unit 114 obtains a corrected sound signal spectrum Y'($\omega$), in which the reverberation sound component is selectively suppressed, by multiplying the input sound signal spectrum Y($\omega$) by the gain g($\omega$) obtained as described above. Thereafter, the inverse FFT calculation unit 127 performs an inverse FFT process on the corrected sound signal spectrum Y'($\omega$) to thereby generate a corrected sound signal y'(t), in which the reverberation sound component is selectively suppressed.

In the corrected sound signal y'(t) thus generated, the component of the voice of the user which directly reaches the microphone 104 of the mobile terminal remains while the reverberation sound component is suppressed. Accordingly, even in an environment in which a number of reflections by surrounding walls occur, such as a bathroom, the voice of a user who uses a telephone-call function of the mobile terminal including the reverberation suppression device 100 in the present disclosure may be clearly transmitted to a partner of the telephone call. Furthermore, accordingly, the user of a mobile terminal, which includes the reverberation suppression device 100 as in the present disclosure, may secretly use the mobile terminal in the bathroom without the counterpart's knowledge.

The reverberation suppression device 100 may be realized using the mobile terminal's hardware.

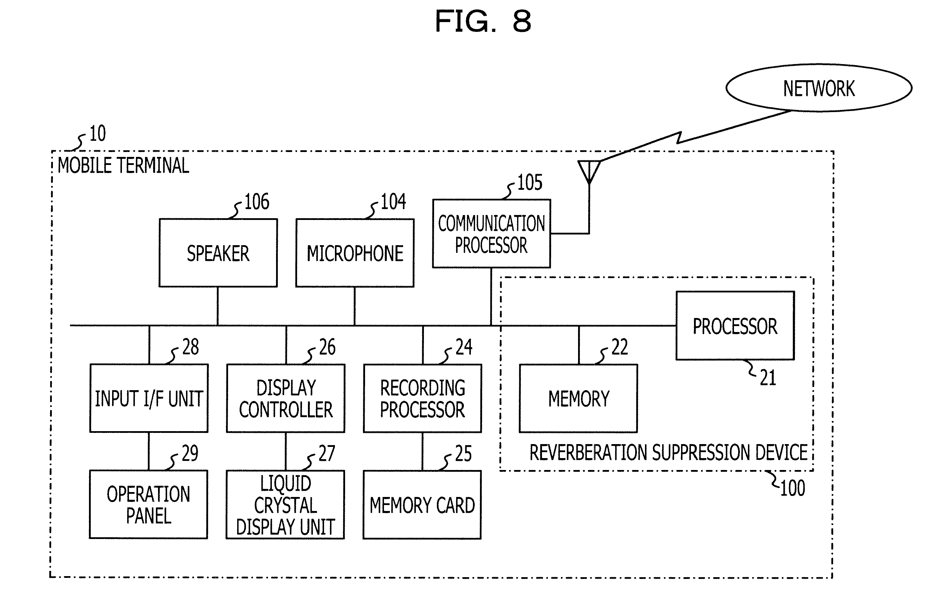

FIG. 8 is a diagram illustrating an example of a hardware configuration of a mobile terminal 10. Note that, in FIG. 8, components the same as those illustrated in FIG. 1 are denoted by reference numerals the same as those illustrated in FIG. 1, and descriptions thereof are omitted.

The mobile terminal 10 includes a processor 21, a memory 22, a communication processor 105, a microphone 104, and a speaker 106. The mobile terminal 10 further includes a recording processor 24, a detachable memory card 25, a display controller 26, a liquid crystal display unit 27, an input interface (I/F) unit 28, and an operation panel 29.

The processor 21, the memory 22, the communication processor 105, the microphone 104, the speaker 106, the recording processor 24, the display controller 26, and the I/F unit 28 are connected to one another through a bus. The recording processor 24 performs processing to read and write data to and from the memory card 25. The display controller 26 controls display processing performed by the liquid crystal display unit 27. The input I/F unit 28 performs processing to transmit information representing an operation performed on the operation panel 29 to the processor 21.

The memory 22 stores application programs used by the processor 21 to execute a reverberation suppression process as well as an operating system of the mobile terminal 10. The application programs include a program used to execute both a process to correct a response and a process to correct a sound signal, which are both included in a reverberation suppression method in the present disclosure. An application program used to execute the reverberation suppression process may be distributed by being recorded in the memory card 25, for example. The memory card 25 is inserted into the recording processor 24 and a process of reading the memory card 25 is performed so that the application program used to execute the reverberation suppression process is stored in the memory 22. Furthermore, the application program used to execute the reverberation suppression process may be written to the memory 22 through a network, such as the Internet, and the communication processor 105.

Furthermore, the first storage unit 101 illustrated in FIG. 1 may be realized by storing information representing a first impulse response h1(t) in the memory 22 along with data such as the application programs described above. For example, information representing a waveform of an impulse response measured in an average bathroom may be stored in the memory 22 as information representing the first impulse response h1(t). Information representing the waveform of the impulse response may be obtained by sampling, in an appropriate cycle, a signal output from the microphone 104 when the sound source, which is disposed in an appropriate position that takes the directivity of the microphone 104 of the mobile terminal 10 into consideration, outputs an impulse.

On the other hand, as will be describe later, the second storage unit 102 illustrated in FIG. 1 may be realized by storing information that represents a second impulse response h2(t), which is obtained as a result of a measurement of the second impulse response h2(t), in the memory 22.

Furthermore, the processor 21 may function as the response correction unit 103 illustrated in FIG. 1 by executing a program for a process that corrects a response, in which the program is included in the application programs stored in the memory 22. Moreover, the processor 21 may function as the sound correction unit 110 illustrated in FIG. 1 by executing a program for a process that corrects a sound signal, in which the program is included in the application programs stored in the memory 22. As described above, the processor 21 may function as the reverberation suppression device 100 illustrated in FIG. 1 by executing application programs stored in the memory 22.

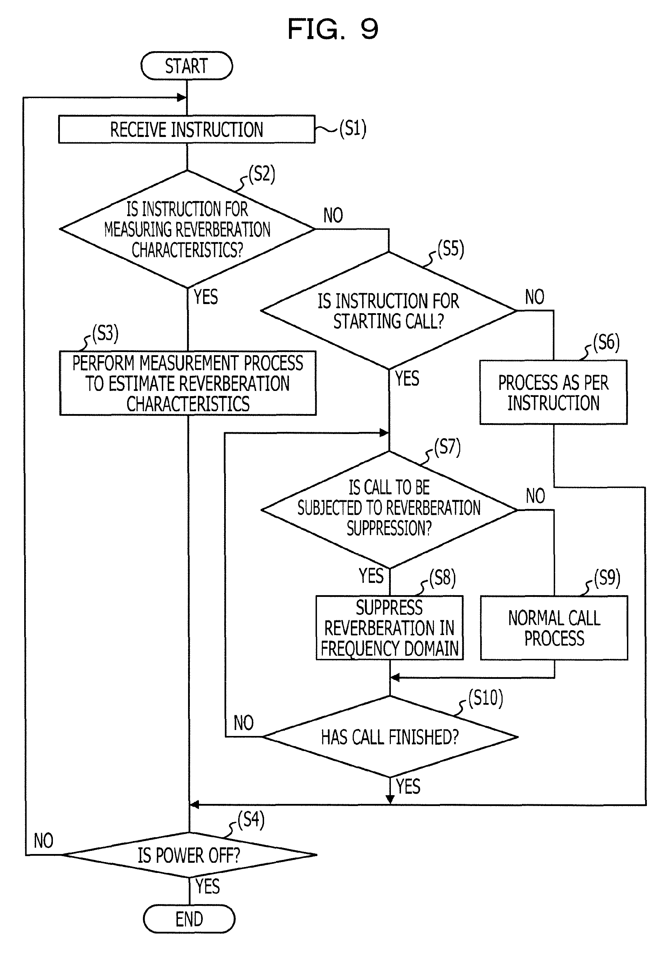

FIG. 9 is a flowchart illustrating a process performed by a mobile terminal that includes the reverberation suppression device 100 according to the present disclosure. The processor 21 illustrated in FIG. 8 executes operations in step S1 to step S10, which are included in the flowchart illustrated in FIG. 9, in cooperation with the other units.

In step S1, the processor 21 receives an instruction, which is input by the user by operating the operation panel 29, through the input I/F unit 28. Next, the processor 21 determines whether the received instruction represents a direction for measurement in order to estimate reverberation characteristics (step S2).

For example, the processor 21 may cause the liquid crystal display unit 27 to display, through the display controller 26, an item which directs measurement of an impulse response in a given room as an option included in a detailed-setting menu in the mobile terminal 10. The processor 21 may cause the liquid crystal display unit 27, through the display controller 26, to display a message which prompts for measurement of an impulse response in a bathroom before a telephone-call function of the mobile terminal 10 is used in the bathroom, for example. Thereafter, when information representing that an operation of agreeing to the measurement has been performed is displayed in response to a notification from the input I/F unit 28, the processor 21 determines that the determination is affirmative in step S2 and performs a measurement process to estimate the reverberation characteristics (step S3).

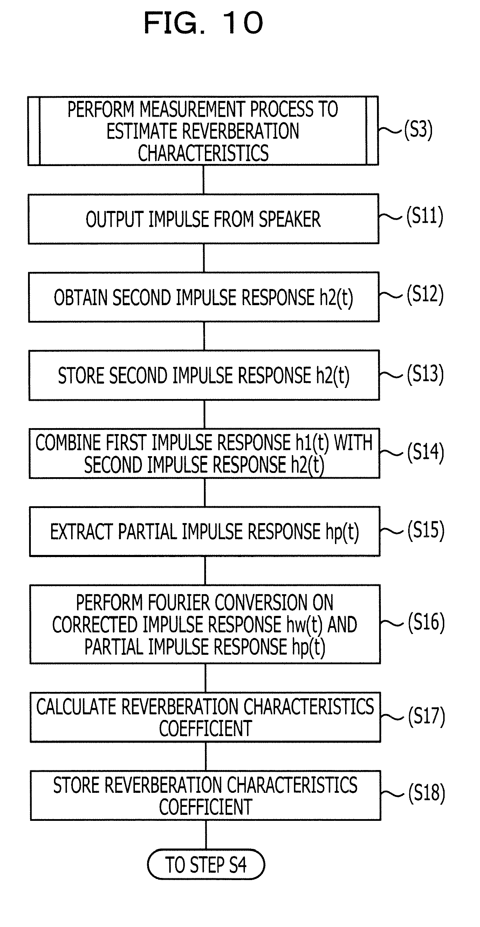

FIG. 10 is a flowchart illustrating a measurement process performed to estimate the reverberation characteristic. Processing in step S11 to step S18 illustrated in FIG. 10 is an example of the processing for step S3 illustrated in FIG. 9. The processor 21 illustrated in FIG. 8 executes the operations in step S11 to step S18 in cooperation with the other units.

In step S11, the processor 21 starts measurement of the second impulse response h2(t) by causing the speaker 106 illustrated in FIG. 8 to output an impulse. The processor 21 obtains information representing the second impulse response h2(t) from a sound signal output from the microphone 104 in accordance with the impulse output from the speaker 106 (step S12). In step S12, the processor 21 may obtain information that represents a waveform of the second impulse response h2(t) by sampling a signal output from the microphone 104 in an appropriate sampling cycle, for example.

Next, the processor 21 stores the information representing the second impulse response h2(t) obtained in step S12 in the memory 22 (step S13).

Subsequently, the processor 21 combines the first impulse response h1(t) represented by the information stored in the memory 22 and the second impulse response h2(t) represented by the information stored in step S13 with each other so as to obtain the corrected impulse response hw(t) (step S14). The processor 21 may, for example, obtain the corrected impulse response hw(t) by performing the weighted addition process represented by expression (1) described above using the weighting function $\alpha(t)$ and the weighting function $\beta(t)$ illustrated in FIGs. 5A and 5B. As described above, the processor 21 may realize the function of the response correction unit 103 illustrated in FIG. 1 by executing the operation in step S14.

Note that the processor 21 may detect a time point when the first impulse response h1(t) and the second impulse response h2(t) have the same value as a time T1, which represents a boundary between the first period P1 and the second period P2, before performing the weighted addition process. Since the weighted addition process using the weighting functions $\alpha(t)$ and $\beta(t)$, which are defined using the time T1 that was detected as the boundary, is performed, the processor 21 may ensure continuity of the corrected impulse response hw(t) in the vicinity of the boundary between the first period P1 and the second period P2.

Next, the processor 21 extracts the partial impulse response hp(t), which represents the transmission characteristics of the reverberation sound in the time domain, from the corrected impulse response hw(t) obtained in step S14 (step S15). The processor 21 may, for example, extract a portion of the corrected impulse response hw(t) obtained in step S14 that corresponds to the second period P2 as the partial impulse response hp(t). The processor 21 may store the second impulse response h2(t), which is weighted by the weighting function $\beta(t)$ in the course of the operation in step S14, as the partial impulse response hp(t). The function of the extraction unit 123 illustrated in FIG. 4 may be realized by the processor 21 by executing the operation in step S15.

Subsequently, the processor 21 performs a process that performs a Fourier transform on the corrected impulse response hw(t) and the partial impulse response hp(t) (step S16). By this process, for example, the processor 21 obtains the power $|Hw(\omega)|^2$ of the corrected impulse response spectrum $Hw(\omega)$ and the power $|Hp(\omega)|^2$ of the partial impulse response spectrum $Hp(\omega)$. The processor 21 may obtain an absolute value $|Hw(\omega)|$ of the corrected impulse response

spectrum Hw($\omega$) and an absolute value $|Hp(\omega)|$ of the partial impulse response spectrum Hp($\omega$) in the operation in step S16. As described above, the corrected response conversion unit 126 and the partial response conversion unit 124 illustrated in FIG. 4 may be realized by executing the operation in step S16 using the processor 21.

The processor 21 calculates a ratio of the power $|Hp(\omega)|^2$ to the power $|Hw(\omega)|^2$ or a ratio of the absolute value $|Hp(\omega)|$ to the absolute value $|Hw(\omega)|$ as the reverberation characteristics coefficient illustrated in expression (9) or expression (10) in accordance with the results of the Fourier transforms obtained in step S16 (step S17).

As described above, according to the mobile terminal 10, which includes the reverberation suppression device 100 of the present disclosure, the reverberation characteristics coefficient may be calculated in advance in accordance with the second impulse response h2(t) obtained by a measurement using the mobile terminal 10 before the telephone-call function is used in a place such as a bathroom.

Thereafter, the processor 21 performs a process of storing the reverberation characteristics coefficient obtained in step S17 in the memory 22 (step S18).

Note that the processor 21 may store different reverberation characteristics coefficients in the memory 22, taking into consideration a case where reverberation sounds in different rooms having different characteristics are to be suppressed. For example, the processor 21 may store the reverberation characteristics coefficient calculated in the operation in step S17 in the memory 22 as information representing the room where the second impulse response h2 (t) is measured. Furthermore, after the process of calculating the reverberation characteristics coefficient performed in step S17 finishes, the information representing the second impulse response h2(t) stored in the memory 22 may be removed since the information representing the second impulse response h2(t) is no longer used. On the other hand, since it is possible that information representing the first impulse response h1(t) may be used for a calculation of a reverberation characteristics coefficient in another room, the processor 21 keeps storing information representing the first impulse response h1(t) in the memory 22 even after the completion of the operation in step S17.

After the measurement process performed for estimation of the reverberation characteristics finishes, the processor 21 proceeds to the operation in step S4 illustrated in FIG. 9.

In step S4, the processor 21 determines whether an operation to turn off the mobile terminal 10 has been performed. When the operation to turn off the mobile terminal 10 has not been performed (that is, no in step S4), the processor 21 returns to the operation in step S1. Then the processor 21 receives a newly input instruction.

When the instruction received in step S1 does not represent an instruction to perform a measurement to estimate the reverberation characteristics (that is, no in step S2), the processor 21 proceeds to step S5. Then the processor 21 determines whether the input instruction represents an instruction to activate the telephone-call function of the mobile terminal 10 (step S5).

When the instruction received through the input I/F unit 28 does not represent an instruction to activate the telephone-call function (that is, when the determination is negative in step S5), the processor 21 performs an operation suitable for the instruction received in step S1 (step S6). After the operation in step S6, the process proceeds to step S4.

On the other hand, when the instruction for activating the telephone-call function, such as an instruction for performing a call process, has been input (that is, yes in step S5), the processor 21 determines whether the telephone call is to be subjected to the reverberation suppression (step S7). For example, when an instruction for specifying a reverberation suppression mode is received along with the instruction to activate the telephone-call function through the input I/F unit 28, the processor 21 determines that telephone calls performed thereafter are to be subjected to reverberation suppression (that is, yes in step S7). In this case, the processor 21 proceeds to a process for suppressing reverberation in step S8.

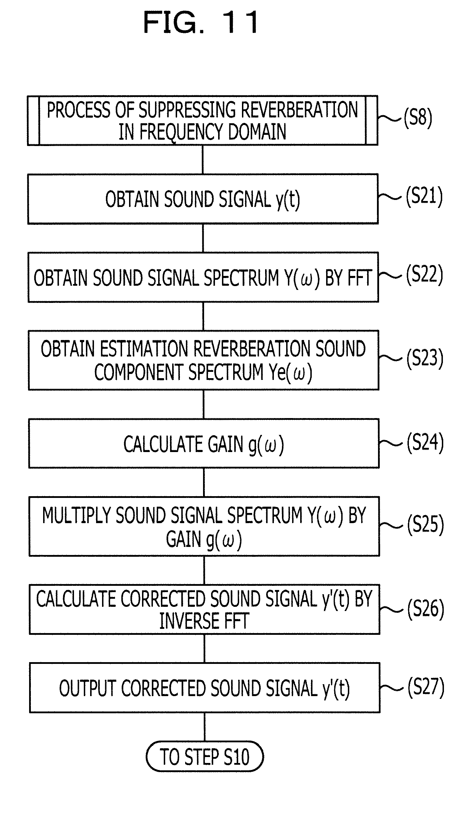

FIG. 11 is a flowchart illustrating the process of suppressing reverberation in the frequency domain. The operations in step S21 to step S27 illustrated in FIG. 11 are an example of the operation in step S8 illustrated in FIG. 9. The processor 21 illustrated in FIG. 8 executes the operations in step S21 to step S27 in cooperation with the other units.

The processor 21 obtains a sound signal y(t) from the microphone 104 (step S21). The processor 21 may, for example, sample the sound signal y(t) in an amount of time that corresponds to one frame, which is a processing unit of the fast Fourier transform process, in a given sampling cycle so as to obtain information representing a waveform of the sound signal y(t).

Next, the processor 21 obtains a sound signal spectrum Y($\omega$) by applying the fast Fourier transform process on the sound signal y(t) obtained in step S21 (step S22). As described above, the function of the FFT calculation unit 122 illustrated in FIG. 4 may be realized by executing the operation in step S22 using the processor 21.

Next, the processor 21 multiplies the sound signal spectrum Y($\omega$) by the reverberation characteristics coefficient stored in the memory 22 in step S18 of FIG. 10 so as to obtain an estimated reverberation sound component spectrum Ye($\omega$) (step S23). In this way, the function of the characteristics calculation unit 125 illustrated in FIG. 4 may be realized by executing the operation in step S17 illustrated in FIG. 10 and the operation in step S23 illustrated in FIG. 11 at different timings using the processor 21.

Note that, when different reverberation characteristics coefficients are stored in the memory 22 for different rooms, the processor 21 may execute the operation in step S23 using one of the reverberation characteristics coefficients corresponding to a room specified by the instruction for specifying the reverberation suppression mode as described above, for example.

Next, the processor 21 calculates a gain $g(\omega)$ to be applied to the sound signal spectrum $Y(\omega)$ in accordance with the estimated reverberation sound component spectrum $Ye(\omega)$ obtained in step S23 (step S24). The processor 21 may calculate a value for gain $g(\omega)$ for a frequency of the reverberation sound in accordance with the magnitude of the frequency components of the reverberation sound represented by the values of the estimated reverberation sound component spectra $Ye(\omega)$ as described below.

The value of gain $g(\omega)$ preferably become smaller as the magnitude of the frequency components of the reverberation sound represented by the estimated reverberation sound component spectra $Ye(\omega)$ increase. By this, an operation of suppressing reverberation sound may be controlled in accordance with a magnitude of a reverberation component. Note that a value of the gain $g(\omega)$ may have an upper limit and a lower limit as described below.

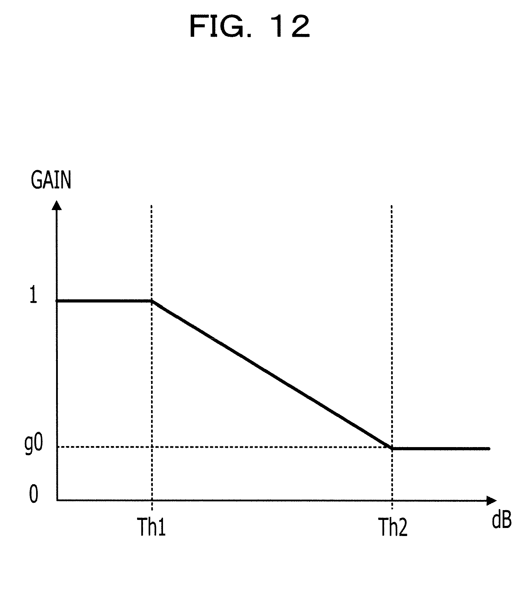

FIG. 12 is a diagram illustrating a gain calculation process. In a graph illustrated in FIG. 12, a solid line represents an example of the relationship between a magnitude of a reverberation sound component, which is represented by the value of the estimated reverberation sound component spectrum $Ye(\omega)$, and the value of the gain $g(\omega)$.

In the graph illustrated in FIG. 12, the value of the gain $g(\omega)$ corresponding to a range in which the magnitude of the reverberation sound component is smaller than a threshold value Th1, which will be described hereinafter, is 1, the upper limit value of the gain. Furthermore, the value of the gain $g(\omega)$ corresponding to a range in which a magnitude of the reverberation sound component is greater than or equal to the threshold value Th1 and less than or equal to another threshold value Th2 monotonically reduces from the upper limit value of 1 to a lower limit value of g0 in accordance with the magnitude of the reverberation sound component. On the other hand, the value of the gain $g(\omega)$ is g0, which is the lower limit value, in a range for when the magnitude of the reverberation sound component is larger than the threshold value Th2.

The processor 21 may function as the gain calculation unit 113 illustrated in FIG. 1 by determining a gain $g(\omega)$, which corresponds to the magnitude of the reverberation sound component represented by the value of the estimated reverberation sound component spectrum $Ye(\omega)$, in accordance with the relationship illustrated in FIG. 12.

Note that the threshold value Th1 illustrated in FIG. 12 may be determined in advance in accordance with a value representing a magnitude of background noise expected in an environment where the telephone-call function of the mobile terminal 10 is used, for example. Note that the value of the threshold value Th1 may be represented using a noise level as a measurement. Furthermore, using the gain lower limit value of g0 described above, the threshold value Th2 may be determined in advance in accordance with a result of an experiment to investigate the magnitude of the reverberation sound component, which is obtained when distortion is generated in sound that has been subjected to the reverberation suppression.

After calculating the gain $g(\omega)$ as described above, the processor 21 proceeds to step S25 illustrated in FIG. 11. In step S25, the processor 21 multiplies the sound signal spectrum $Y(\omega)$ by the gain $g(\omega)$ obtained in step S24 to obtain a corrected sound signal spectrum $Y'(\omega)$. In this way, the processor 21 may realize the function of the multiplication unit 114 illustrated in FIG. 1 by executing the operation in step S25.

Next, the processor 21 obtains a corrected sound signal $y'(t)$ by performing a fast inverse Fourier transform process on the corrected sound signal spectrum $Y'(\omega)$ (step S26). Thereafter, the processor 21 inputs the corrected sound signal $y'(t)$ obtained in step S26 to the communication processor 105 instead of the sound signal $y(t)$ obtained by the microphone 104 (step S27). In this way, the processor 21 may realize the function of the inverse FFT calculation unit 127 illustrated in FIG. 4 by executing the operations in step S26 and step S27.

After the operations in step S21 to step S27 are completed, the processor 21 determines whether the end of the telephone call has been instructed in step S10 illustrated in FIG. 9.

The processor 21 repeatedly performs the operations in step S7, step S8, and step S10 until the processor 21 receives a notification representing that an operation instructing the end of the telephone call has been performed. By this, when the user uses the telephone-call function of the mobile terminal 10 in an environment in which large reverberation sound is generated, such as a bathroom, the reverberation sound component included in the sound signal $y(t)$ obtained by the microphone 104 may be appropriately suppressed.

On the other hand, in step S7 illustrated in FIG. 9, when only an instruction to activate the telephone-call function is received through the input I/F unit 28, the processor 21 determines that telephone calls performed thereafter are normal telephone calls which are not to be subjected to the reverberation suppression process (that is, when the determination is negative in step S7). In this case, as with existing technology, the processor 21 transmits the sound signal $y(t)$ obtained by the microphone 104 to the communication processor 105 without change and performs a normal telephone-call process. Then the processor 21 repeatedly performs the operations in step S7, step S9, and step S10 until it is determined that the telephone call has been terminated in step S10.

When receiving a notification from the input I/F unit 28 representing that the operation to terminate the telephone call has been performed, the processor 21 proceeds to step S4 as a result of an affirmative determination performed in step S10.

In this way, the mobile terminal 10, which includes the reverberation suppression device 100 of the present disclosure, may employ appropriate reverberation suppression in accordance with an instruction by the user only where the environment in which the user uses the telephone-call function of the mobile terminal 10 is to be subjected to the reverberation suppression.

Note that another method that uses the response correction unit 103 illustrated in FIG. 1 to obtain the corrected impulse response hw(t) may be used as long as a portion of the first impulse response h1(t) that corresponds to the first period P1 is reflected in the waveform of the second impulse response h2(t). For example, the corrected impulse response hw(t) may be obtained by correcting a portion of the second impulse response h2(t) corresponding to the first period P1 such that the portion matches the corresponding portion of the first impulse response h1(t).

Furthermore, the reverberation sound component included in the sound signal y(t) may be suppressed in the time domain in accordance with the corrected impulse response hw(t).

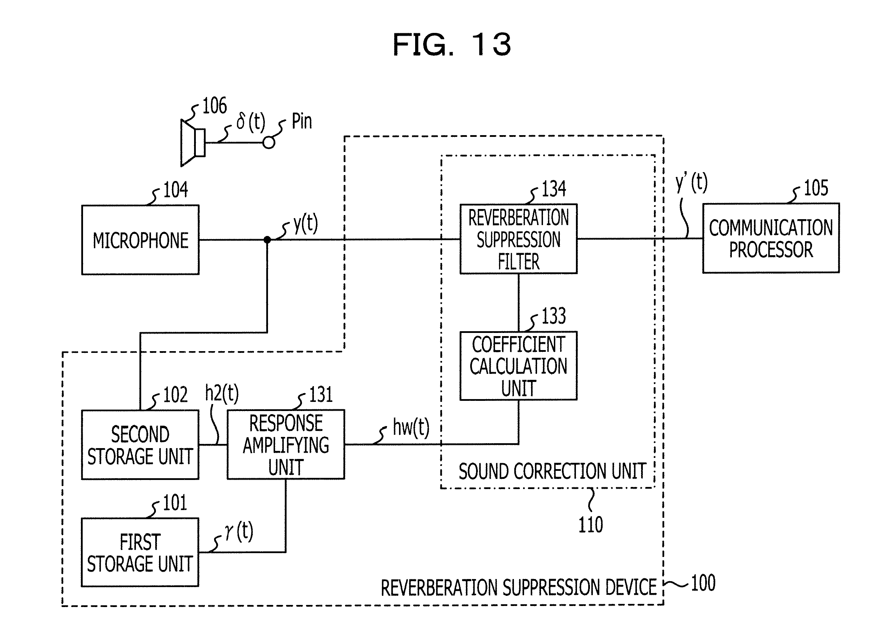

FIG. 13 is a diagram illustrating a reverberation suppression device 100 according to a third embodiment. Note that, in FIG. 13, components which are the same as those illustrated in FIG. 1 are denoted by reference numerals the same as those illustrated in FIG. 1, and descriptions thereof are omitted.

A response amplifying unit 131 illustrated in FIG. 13 is an example of the response correction unit 103, which generates the corrected impulse response hw(t) from the second impulse response h2(t) that is represented by information stored in the second storage unit 102. Furthermore, a sound correction unit 110 illustrated in FIG. 13 includes a coefficient calculation unit 133 and a reverberation suppression filter 134.

Note that a first storage unit 101 illustrated in FIG. 13 stores, as information representing a first impulse response h1(t), information that represents a weighting function $\gamma(t)$ used to approximate a waveform of a portion of a second impulse response h2(t), which corresponds to a first period P1, to a waveform of a first impulse response h1(t), which corresponds to the first period P1.

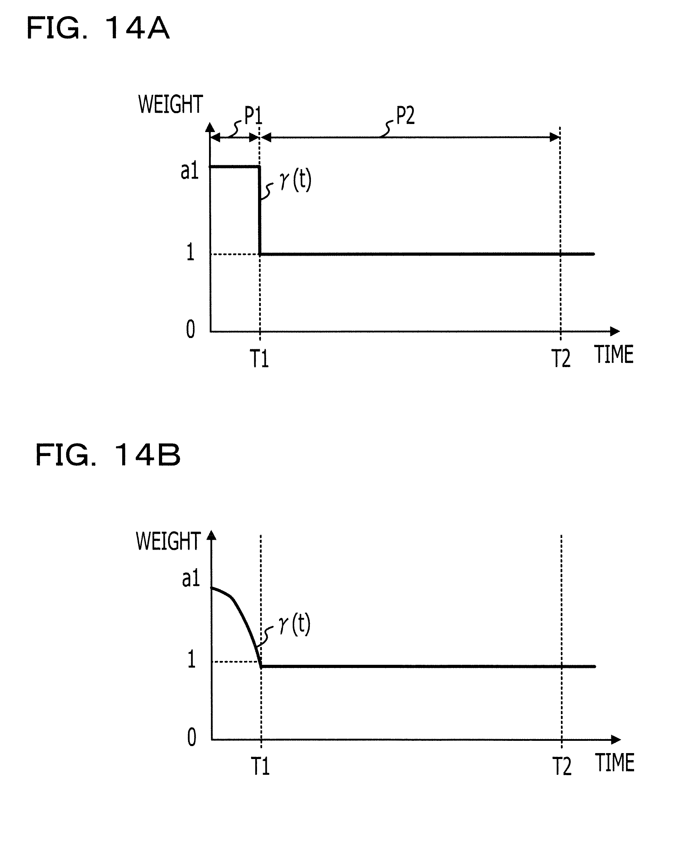

FIGs. 14A and 14B illustrate examples of the weighting function $\gamma(t)$. Note that, in FIGs. 14A and 14B, components which are the same as those illustrated in FIGs. 5A, 5B, and 5C are denoted by reference numerals the same as those illustrated in FIGs. 5A, 5B, and 5C, and descriptions thereof are omitted.

FIG. 14A illustrates an example of a weighting function $\gamma(t)$ which maintains an initial value a1 that corresponds to the ratio of the peak of the first impulse response h1(t) to the peak of the second impulse response h2(t) in the first period P1. On the other hand, FIG. 14B illustrates an example of a weighting function $\gamma(t)$ which monotonically decreases from the initial value a1 to a numerical value of 1 in the first period P1.

Note that value of the weighting function $\gamma(t)$ in the second period P2 is preferably fixed to a constant value of 1 so that the waveform of the second impulse response h2(t) is directly reflected in the corrected impulse response hw(t).

Furthermore, for example, the initial value a1 may be obtained as follows. In the same room, the waveform of a signal output from a microphone 104 when an impulse is generated by a sound source installed in an ideal position and the waveform of a signal output from the microphone 104 when an impulse is generated by a speaker 106 of a mobile terminal 10 are individually obtained. The initial value a1 may be determined in accordance with a ratio of the peak of the waveform of the output signal that corresponds to the impulse generated in the ideal position to the peak of the waveform of the output signal that corresponds to the impulse generated in the same position as when the second impulse response h2(t) was obtained.

Furthermore, the response amplifying unit 131 illustrated in FIG. 13 performs a process of multiplying the waveform of the second impulse response h2(t) by the weighting function $\gamma(t)$. By this, the portion of the second impulse response h2(t) that corresponds to the first period P1 illustrated in FIG. 6A may be selectively amplified, and a corrected impulse response hw(t), which is an approximation of the corrected impulse response hw(t) illustrated in FIG. 6B, may be generated.

The reverberation suppression filter 134 illustrated in FIG. 13 is represented as a characteristics coefficient vector C[c(0) to c(T2)]. Furthermore, the coefficient calculation unit 133 calculates components c(0) to c(T2), which are included in the characteristics coefficient vector C and represent the characteristics of the reverberation suppression filter 134, in accordance with expression (11).

$$C = R^{-1} \cdot q \qquad (11)$$

In expression (11), the characteristics coefficient vector C is represented by a product of an inverse matrix of an autocorrelation matrix R of a matrix hw, which represents a corrected impulse response hw(t), and a cross-correlation vector q, which is obtained from an impulse Ip and the matrix hw. The definition of the autocorrelation matrix R of the matrix hw is represented by expression (12) and the definition of the cross-correlation vector q obtained from the impulse Ip and the matrix hw is represented by expression (13).

$$R = hw^{T} \cdot hw \qquad (12)$$

$$q = Ip \cdot hw \qquad (13)$$

The sound correction unit 110 illustrated in FIG. 13 obtains a corrected sound signal y'(t) in which a reverberation sound component is suppressed by inputting a sound signal y(t) output from the microphone 104 to the reverberation suppression filter 134 to which the characteristics coefficient vector C represented by expression (11) described above has been input.

Note that the corrected sound signal y'(t) obtained as an output of the reverberation suppression filter 134 is represented by expression (14), which uses the components c(0) to c(T2) included in the

$$y'(t) = \sum_{i=0}^{T2} c(t) \cdot y(t - i), \ (t = 0, \dots T2) \qquad (14)$$

The reverberation suppression device 100 illustrated in FIG. 13 may also be realized by operating hardware of the mobile terminal 10, which includes the processor 21 and the memory 22 illustrated in FIG. 8, and programs stored in the memory 22 in combination.

When the reverberation suppression device 100 that is illustrated in FIG. 13 is realized using the hardware of the mobile terminal 10 illustrated in FIG. 8, the application programs stored in the memory 22 include a program used to cause the processor 21 to execute a process for the response amplifying unit 131. Furthermore, the application programs stored in the memory 22 may include a program used to cause the processor 21 to execute a process for the coefficient calculation unit 133 and a process for the reverberation suppression filter 134.

Furthermore, the weighting function $\gamma(t)$ described above may be stored in the memory 22 as information that represents the first impulse response h1(t) along with the application programs described above and the like.

Note that the weighting function $\gamma(t)$ illustrated in FIGs. 14A and 14B may be represented using a smaller amount of information when compared with the waveform of the first impulse response h1(t), and therefore, the amount of information to be stored in the memory 22 of the mobile terminal 10 for the reverberation suppression device 100 of the present disclosure may be suppressed.

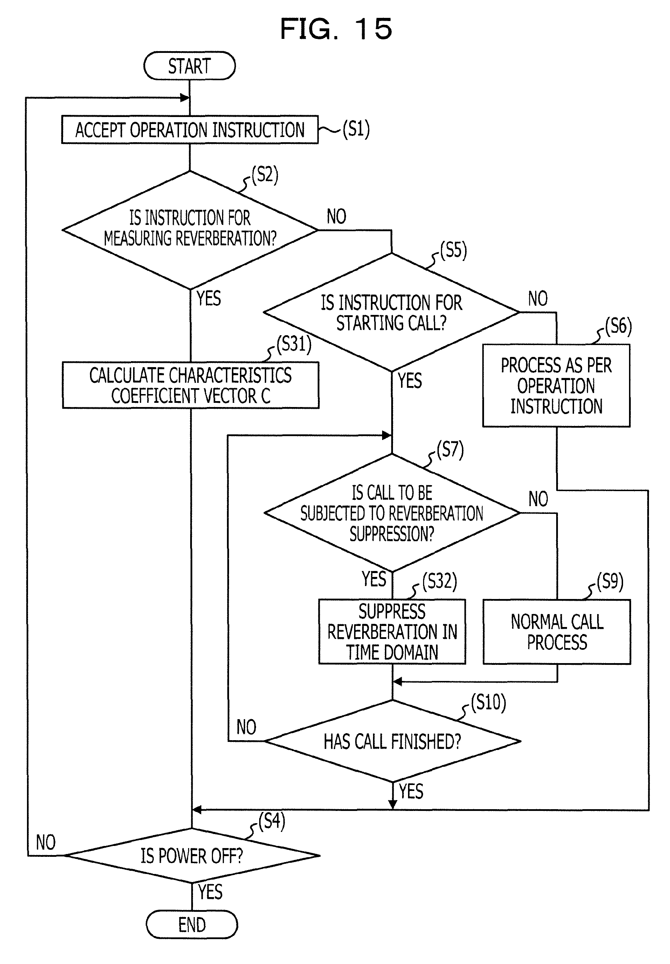

FIG. 15 is a flowchart that illustrates a process of the mobile terminal that includes the reverberation suppression device 100 according to the present disclosure. Note that, in FIG. 15, steps which correspond to operations which are the same as the operations in the steps included in the flowchart illustrated in FIG. 9 are denoted by reference numerals the same as those of the flowchart illustrated in FIG. 9, and descriptions thereof are omitted.

When a process is performed in accordance with the flowchart illustrated in FIG. 15, the processor 21 performs a process to calculate the characteristics coefficient vector C described above in step S31, instead of the operation of step S3 illustrated in FIG. 9, in accordance with an affirmative determination in step S2.

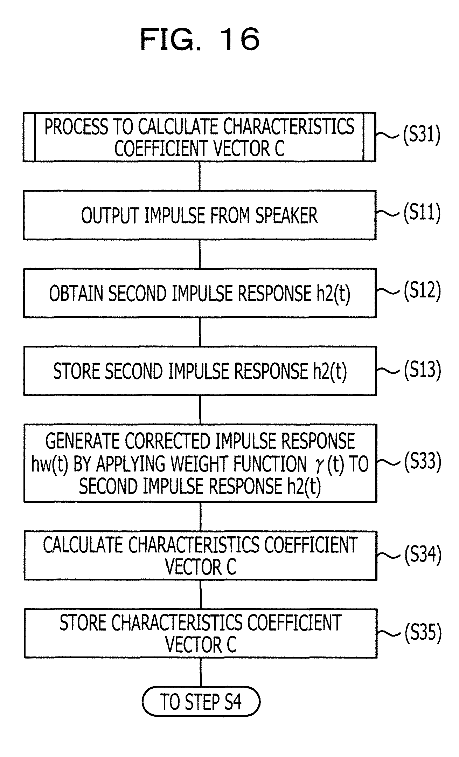

FIG. 16 is a flowchart illustrating a process of calculating the characteristics coefficient vector C. Note that, in FIG. 16, steps which correspond to operations which are the same as the operations in the steps included in the flowchart illustrated in FIG. 10 are denoted by reference numerals the same as those of the flowchart illustrated in FIG. 10, and descriptions thereof are omitted.

Operations in step S11 to step S13 and operations in step S33 to step S35 illustrated in FIG. 16 are an example of the operation in step S31 illustrated in FIG. 15. The processor 21 illustrated in FIG. 8 performs the operations in step S11 to step S13 and the operations in step S33 to step S35 in cooperation with the units included in the mobile terminal 10.

After obtaining the second impulse response h2(t) by performing the operations in step S11 to step S13, the processor 21 proceeds to step S33. In step S33, the processor 21 generates the corrected impulse response hw(t) by multiplying the second impulse response h2(t) by the weighting function $\gamma(t)$. As described above, the processor 21 may realize the function of the response amplifying unit 131 illustrated in FIG. 13 by executing the operation in step S33.

Next, the processor 21 performs a process to calculate the characteristics coefficient vector C in accordance with the expression (11) to expression (13) above (step S34). Then the processor 21 performs a process to store the characteristics coefficient vector C calculated in step S34 in the memory 22 (step S35), and after step S35 finishes, the processor 21 proceeds to step S4 illustrated in FIG. 15.

When the determination is affirmative in step S7 in FIG. 15, the processor 21 executes a process to suppress a reverberation sound component included in a sound signal y(t), which is obtained by the microphone 104, in the time domain (step S32).

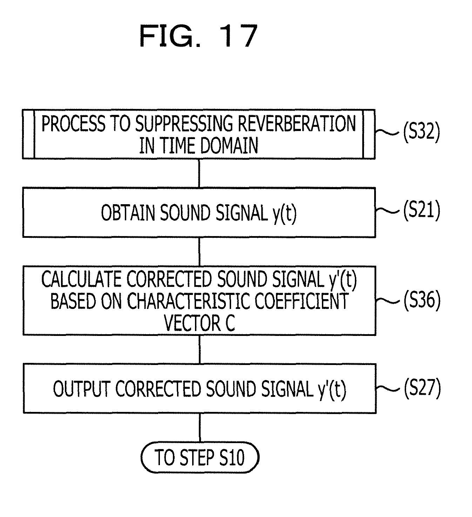

FIG. 17 is a flowchart illustrating the process of suppressing reverberation in the time domain. Note that, in FIG. 17, steps which correspond to operations which are the same as the operations in the steps included in the flowchart illustrated in FIG. 11 are denoted by reference numerals the same as those of the flowchart illustrated in FIG. 11, and descriptions thereof are omitted.

Operations in step S21, step S36, and step S27 illustrated in FIG. 17 are an example of the operation in step S32 illustrated in FIG. 15. The processor 21 illustrated in FIG. 8 performs the operations in step S21, step S36, and step S27 in cooperation with the units included in the mobile terminal 10.

In step S36 illustrated in FIG. 17, the processor 21 performs a process to calculate a corrected sound signal y'(t) as convolution of the sound signal y(t) obtained in step S21 and the characteristics coefficient vector C in accordance with expression (14) described above. In this way, the processor 21 may realize the function of the reverberation suppression filter 134 by executing the operation in step S36.

It may be apparent from expression (11) to expression (13) that the characteristics coefficient vector C, which is used in the calculation for obtaining the corrected sound signal y'(t), is obtained so that influence of the reverberation sound component represented by the corrected impulse response hw(t) to the sound signal y(t) is diminished if not cancelled.

Accordingly, that the response correction unit 103 of the reverberation suppression device 100 according to the present disclosure, in accordance with the second impulse response h2(t), may obtain the corrected impulse response hw(t), which is the same as an impulse response obtained by accurate measurement, means that reverberation suppression is also applicable in the time domain.

Note that, the two methods illustrated as methods for obtaining the corrected impulse response hw(t) employed in the response correction unit 103, and the two methods for obtaining the corrected sound signal y'(t) employed in the sound correction unit 110 are not limited to the examples described above, and various combinations may be employed. For example, the method for amplifying the portion of the second impulse response h2(t) that corresponds to the first period P1 and the method, which is employed in the sound correction unit 110, for suppressing the reverberation sound component included in the sound signal y(t) in the frequency domain may be used in combination.

Although the embodiments of the present invention have been described in detail, it should be understood that the various changes, substitutions, and alterations could be made hereto without departing from the scope of the claims.

**Claims**

**1.** A reverberation suppression device comprising:

a first storage unit configured to store, in advance, information representing a first impulse response obtained from a signal output from a microphone when a sound source positioned according to directivity of either a speaker or the microphone, which are mounted on a mobile terminal, outputs an impulse;
a second storage unit configured to store information representing a second impulse response obtained from a signal output from the microphone when the speaker mounted on the mobile terminal outputs an impulse in a room where reverberation sound is to be suppressed;
a response correction unit configured to obtain a corrected impulse response, which reflects the room's environment, by correcting the second impulse response, which is represented by the information stored in the second storage unit, using the information representing the first impulse response; and
a sound correction unit configured to correct a sound signal obtained by the microphone when sound is input to the microphone in the room, in accordance with the corrected impulse response.

**2.** The device according to claim 1,
wherein the first storage unit is arranged to store information representing a waveform of the first impulse response, the second storage unit is arranged to store information representing a waveform of the second impulse response, and the response correction unit is arranged to obtain the corrected impulse response by performing weighted addition by applying different weights to first and second portions of the information representing the waveform of the first impulse response and applying the different weights to first and second portions of the information representing the waveform of the second impulse response, the first portions corresponding to a first period which is a period of time from when the impulse is output to when a given first time point is reached, and the second portions corresponding to a second period which is a period of time after the first time point.

**3.** The device according to claim 1,

wherein the first storage unit is arranged to store, in advance, as information representing the first impulse information representing a ratio of a power of sound of the first impulse response, which corresponds to the first period, to a power of sound that reaches the microphone in the first period when the impulse is output from the speaker mounted on the mobile terminal,

the second storage unit is arranged to store information representing a waveform of the second impulse response, and the response correction unit is arranged to obtain the corrected impulse response by performing correction by amplifying a portion of the waveform of the second impulse response, which corresponds to the first period, using the information representing the ratio.

4. The device according to claim 1,
wherein the sound correction unit further includes
a converter configured to convert the sound signal into a signal in the frequency domain,
an estimation unit configured to estimate reverberation characteristics, which represent frequency characteristics of reverberation sound included in the sound signal, in accordance with the corrected impulse response and the signal in the frequency domain,
a gain calculation unit configured to calculate a gain used to suppress frequency components of the reverberation sound in accordance with the reverberation characteristics estimated by the estimation unit, and
a multiplying unit configured to multiply the signal in the frequency domain by the gain.

5. The device according to claim 4,
wherein the estimation unit further includes
an extraction unit configured to extract a partial impulse response representing a reverberation sound component from the corrected impulse response, and
a characteristics calculation unit configured to calculate the reverberation characteristics by multiplying the signal in the frequency domain by a ratio of a corrected impulse response spectrum corresponding to the corrected impulse response to a partial impulse response spectrum corresponding to the partial impulse response.

6. The device according to claim 4,
wherein the gain calculation unit is arranged to set a lower limit for gain, which is determined in advance, to a gain corresponding to a frequency component having reverberation characteristics greater than a given first threshold value, set an upper limit which is larger than the lower limit to a gain corresponding to a frequency component having reverberation characteristics less than a second threshold value, and set a gain which monotonically decreases from the upper limit to the lower limit as a gain corresponding to a frequency component having reverberation characteristics greater than or equal to the second threshold value and less than or equal to the first threshold value in accordance with the value of the reverberation characteristics.

7. A reverberation suppression method comprising:

correcting, using information representing a first impulse response obtained from a signal output from a microphone when a sound source positioned according to directivity of a speaker or the microphone mounted on the mobile terminal outputs an impulse, a second impulse response obtained from a signal output from the microphone when the speaker mounted on the mobile terminal outputs an impulse in a room where reverberation sound is to be suppressed so that a corrected impulse response that reflects the room's environment is obtained; and

correcting a sound signal obtained by the microphone when sound is input to the microphone in the room in accordance with the corrected impulse response.

8. The method according to claim 7,
wherein the correcting to obtain the corrected impulse response includes a weighted addition process of applying different weights to first and second portions of information, which represents a waveform of the first impulse response, and applying different weights to first and second portions of information, which represent a waveform of the second impulse response, the first portions corresponding to a first period that is a period of time from when the impulse is output to when a given first time point is reached, and the second portions corresponding to a second period that is a period of time after the first time point.

9. The method according to claim 7,
wherein the correcting to obtain the corrected impulse response includes a process of amplifying a portion of the waveform of the second impulse response corresponding to the first period using information that represents a ratio of a power of sound of the first impulse response corresponding to the first period to a power of sound which reaches the microphone in the first period when the speaker mounted on the mobile terminal outputs an impulse.

10. The method according to claim 7,
wherein the correction of the sound signal further includes
converting the sound signal into a signal in the frequency domain,
estimating reverberation characteristics that represent frequency characteristics of reverberation sound included in the sound signal in accordance with the corrected impulse response and the signal in the frequency domain,
calculating a gain used to suppress frequency components of the reverberation sound in accordance with the estimated reverberation characteristics, and
multiplying the signal in the frequency domain by the gain.

11. The method according to claim 10,
wherein estimating reverberation characteristics further includes
extracting a partial impulse response representing a reverberation sound component from the corrected impulse response, and
calculating the reverberation characteristics by multiplying the signal in the frequency domain by a ratio of a corrected impulse response spectrum corresponding to the corrected impulse response to a partial impulse response spectrum corresponding to the partial impulse response.

12. A program that causes a computer to execute a process comprising:

correcting, using information representing a first impulse response obtained from a signal output from a microphone when a sound source positioned according to directivity of a speaker or the microphone mounted on a mobile terminal outputs an impulse, a second impulse response obtained from a signal output from the microphone when the speaker mounted on the mobile terminal outputs an impulse in a room where reverberation sound is to be suppressed so that a corrected impulse response which reflects the room's environment is obtained; and
correcting a sound signal obtained by the microphone when sound is input to the microphone in the room in accordance with the corrected impulse response.

13. The program according to claim 12,
wherein the correcting to obtain the corrected impulse response includes a process of amplifying a portion of the waveform of the second impulse response corresponding to the first period using information that represents a ratio of a power of sound of the first impulse response corresponding to the first period to a power of sound which reaches the microphone in the first period when the speaker mounted on the mobile terminal outputs an impulse.

14. The program according to claim 12,
wherein the correction of the sound signal further includes
converting the sound signal into a signal in the frequency domain,
estimating reverberation characteristics that represent frequency characteristics of reverberation sound included in the sound signal in accordance with the corrected impulse response and the signal in the frequency domain,
calculating a gain used to suppress frequency components of the reverberation sound in accordance with the estimated reverberation characteristics, and
multiplying the signal in the frequency domain by the gain.

15. The program according to claim 14,
wherein estimating reverberation characteristics further includes
extracting a partial impulse response representing a reverberation sound component from the corrected impulse response, and
calculating the reverberation characteristics by multiplying the signal in the frequency domain by a ratio of a corrected impulse response spectrum corresponding to the corrected impulse response to a partial impulse response spectrum corresponding to the partial impulse response.

# FIG. 1

EP 2 552 131 A2

# FIG. 2A

# FIG. 2B

EP 2 552 131 A2

FIG. 3

FIG. 4

FIG. 5A

FIG. 5B

FIG. 5C

## FIG. 6A

## FIG. 6B

EP 2 552 131 A2

FIG. 7A

FIG. 7B

# FIG. 8

# FIG. 9

START

RECEIVE INSTRUCTION ～(S1)

(S2)

IS INSTRUCTION FOR
MEASURING REVERBERATION
CHARACTERISTICS? — NO

YES

(S3)

PERFORM MEASUREMENT PROCESS
TO ESTIMATE REVERBERATION
CHARACTERISTICS

(S5)

IS INSTRUCTION FOR
STARTING CALL? — NO

YES

(S6)

PROCESS AS PER
INSTRUCTION

(S7)

IS CALL TO BE
SUBJECTED TO REVERBERATION
SUPPRESSION? — NO

YES (S8)

SUPPRESS
REVERBERATION IN
FREQUENCY DOMAIN

(S9)

NORMAL CALL
PROCESS

NO

(S10)

HAS CALL FINISHED?

YES

(S4)

NO — IS POWER OFF?

YES

END

# FIG. 10

PERFORM MEASUREMENT PROCESS TO ESTIMATE REVERBERATION CHARACTERISTICS — (S3)

OUTPUT IMPULSE FROM SPEAKER — (S11)

OBTAIN SECOND IMPULSE RESPONSE h2(t) — (S12)

STORE SECOND IMPULSE RESPONSE h2(t) — (S13)

COMBINE FIRST IMPULSE RESPONSE h1(t) WITH SECOND IMPULSE RESPONSE h2(t) — (S14)

EXTRACT PARTIAL IMPULSE RESPONSE hp(t) — (S15)

PERFORM FOURIER CONVERSION ON CORRECTED IMPULSE RESPONSE hw(t) AND PARTIAL IMPULSE RESPONSE hp(t) — (S16)

CALCULATE REVERBERATION CHARACTERISTICS COEFFICIENT — (S17)

STORE REVERBERATION CHARACTERISTICS COEFFICIENT — (S18)

TO STEP S4

# FIG. 11

| PROCESS OF SUPPRESSING REVERBERATION IN FREQUENCY DOMAIN | (S8) |

| OBTAIN SOUND SIGNAL y(t) | (S21) |

| OBTAIN SOUND SIGNAL SPECTRUM Y($\omega$) BY FFT | (S22) |

| OBTAIN ESTIMATION REVERBERATION SOUND COMPONENT SPECTRUM Ye($\omega$) | (S23) |

| CALCULATE GAIN g($\omega$) | (S24) |

| MULTIPLY SOUND SIGNAL SPECTRUM Y($\omega$) BY GAIN g($\omega$) | (S25) |

| CALCULATE CORRECTED SOUND SIGNAL y'(t) BY INVERSE FFT | (S26) |

| OUTPUT CORRECTED SOUND SIGNAL y'(t) | (S27) |

( TO STEP S10 )

# FIG. 12

# FIG. 13

EP 2 552 131 A2

FIG. 14A

FIG. 14B

# FIG. 15

```
                    ( START )
                        │
        ┌───────────────┤
        │      ┌─────────▼──────────────────┐
        │      │ ACCEPT OPERATION INSTRUCTION │──(S1)
        │      └─────────┬──────────────────┘
        │                │           (S2)
        │          ╱─────▼─────╲
        │        ╱   IS INSTRUCTION FOR  ╲    NO
        │       ╱  MEASURING REVERBERATION? ╲──────┐
        │        ╲                       ╱         │
        │          ╲─────┬─────╱                   │        (S5)
        │             YES │                  ╱─────▼─────╲
        │   (S31)         │                ╱  IS INSTRUCTION FOR ╲   NO
        │ ┌───────────────▼─────┐         ╱   STARTING CALL?      ╲────┐
        │ │ CALCULATE CHARACTERISTICS │    ╲                     ╱     │
        │ │ COEFFICIENT VECTOR C      │     ╲─────┬─────╱        │  (S6)
        │ └───────────────┬─────┘        YES │          ┌────────▼────────┐
        │                 │                  │          │  PROCESS AS PER  │
        │                 │    ┌─────────────▶│          │   OPERATION     │
        │                 │    │              │          │  INSTRUCTION    │
        │                 │    │         ╱────▼────╲      └────────┬────────┘
        │                 │    │       ╱   IS CALL TO BE  ╲  NO    │
        │                 │    │      ╱ SUBJECTED TO REVERBERATION ╲──┐
        │                 │    │      ╲   SUPPRESSION?     ╱        │  │
        │                 │    │       ╲────┬────╱                 │  │
        │                 │    │     YES │   (S32)        (S9)     │  │
        │                 │    │    ┌─────▼─────┐    ┌─────────┐   │  │
        │                 │    │    │ SUPPRESS   │    │ NORMAL   │  │  │
        │                 │    │    │REVERBERATION│   │  CALL    │◀─┘  │
        │                 │    │    │ IN TIME    │    │ PROCESS  │      │
        │                 │    │    │ DOMAIN     │    └────┬─────┘      │
        │                 │    │    └─────┬─────┘         │            │
        │                 │    │          └───────┬───────┘            │
        │                 │    │  NO            ╱──▼──╲      (S10)      │
        │                 │    └──────────────╱ HAS CALL  ╲            │
        │                 │                   ╲  FINISHED? ╱           │
        │                 │                    ╲──┬──╱                 │
        │                 │                  YES │                     │
        │                 ▼◀─────────────────────┘◀────────────────────┘
        │           (S4) │
        │ NO    ╱─────────▼─────────╲
        └──────╱   IS POWER OFF?      ╲
                ╲                    ╱
                 ╲─────────┬─────────╱
                      YES  │
                      ( END )
```

# FIG. 16

PROCESS TO CALCULATE CHARACTERISTICS COEFFICIENT VECTOR C — (S31)

OUTPUT IMPULSE FROM SPEAKER — (S11)

OBTAIN SECOND IMPULSE RESPONSE h2(t) — (S12)

STORE SECOND IMPULSE RESPONSE h2(t) — (S13)

GENERATE CORRECTED IMPULSE RESPONSE hw(t) BY APPLYING WEIGHT FUNCTION $\gamma$(t) TO SECOND IMPULSE RESPONSE h2(t) — (S33)

CALCULATE CHARACTERISTICS COEFFICIENT VECTOR C — (S34)

STORE CHARACTERISTICS COEFFICIENT VECTOR C — (S35)

TO STEP S4

# FIG. 17

| PROCESS TO SUPPRESSING REVERBERATION IN TIME DOMAIN | (S32) |
| OBTAIN SOUND SIGNAL y(t) | (S21) |
| CALCULATE CORRECTED SOUND SIGNAL y'(t) BASED ON CHARACTERISTIC COEFFICIENT VECTOR C | (S36) |
| OUTPUT CORRECTED SOUND SIGNAL y'(t) | (S27) |

( TO STEP S10 )

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2008292845 A

**Non-patent literature cited in the description**

• **MIYOSHI, M. ; KANEDA, Y.** Inverse filtering of room acoustics. *IEEE Trans. ASSP,* 1988, vol. 36 (2), 145-152